# EUROPÄISCHE PATENTANMELDUNG

(11) **EP 1 306 123 A1**
(43) Veröffentlichungstag der Anmeldung: **02.05.2003**
(21) Anmeldenummer: 01125273.1
(22) Anmeldetag: 24.10.2001
(51) Int. Cl.: B01F 13/00, B01F 5/06

(54) **Applikator**

(71) Anmelder: Reiber, Karlheinz, 86842 Türkheim (DE)
(72) Erfinder: Reiber, Karlheinz, 86842 Türkheim (DE)
(74) Vertreter: Fiener, Josef

(57) **Zusammenfassung**

Zur Reduzierung von Restmengen bei einem Applikator zum Anmischen und Ausbringen einer Mehrkomponentenmasse aus einer Mehrkammerkartusche, die mit einer Auslaßdüse (7) lösbar verbunden ist, in der ein Statikmischer (16) zum Anmischen der Masse eingesetzt ist, wird vorgeschlagen, daß der Statikmischer (16) in Axialrichtung zusammendrückbar ausgebildet ist. Der Statikmischer (16) ist bevorzugt verformbar ausgebildet und mittels eines Ausdrückkolbens (9) zusammendrückbar.

## Beschreibung

Die Erfindung betrifft einen Applikator zum Anmischen und Ausbringen einer Mehrkomponentenmasse aus einer Mehrkammerkartusche.

Bekannte Applikatoren oder Austrageinrichtungen dienen dazu, hochviskose, pastenartige oder dickflüssige Massen, wie z.B. Kleber, Dichtmassen, Abformmaterialien in der Dentaltechnik, die in zwei oder mehr Komponenten getrennt aufbewahrt und unmittelbar vor Verwendung vermischt werden, auszubringen. Bei der Benutzung des Applikators wird der Kartuscheninhalt jeder Kammer durch Betätigung eines Austragkolbens mittels eines Hebels durch die Mündung der Kartusche ausgepreßt und in eine Auslaßdüse hineingepreßt. Die Masse durchströmt die an die Kartusche angeschlossene Auslaßdüse, wo die Komponenten mittels eines dort eingesetzten Statikmischers, der aus spiralförmigen, gegenläufigen Schneiden besteht, vermischt werden. Ein solcher Statikmischer ist beispielsweise aus der US 4,538,920 oder der US 5,413,253 bekannt.

Nach Beendigung der Applikation kann die Düse mit dem Mischer entweder abgenommen werden, wobei als Verschluß beispielsweise eine Verschlußkappe aufgesetzt wird, oder sie kann auf der Kartusche aufgesetzt verbleiben und so als Verschluß dienen. Beim erneuten Applizieren wird dann die "alte" Auslaßdüse mit dem darin enthaltenen, teilweise vermischten Material abgenommen und weggeworfen. Anschließend wird eine neue Auslaßdüse aufgesetzt. Das Abnehmen der gebrauchten Auslaßdüse erfolgt aus verschiedenen Gründen. Dient der Applikator zum Ausbringen von Klebern oder auch Abdichtungsmassen, so ist durch die Unterbrechung der Benutzung der Düseninhalt häufig bereits ausgehärtet, wodurch die Auslaßdüse unbrauchbar wird. Im dentaltechnischen und medizinischen Bereich dagegen muß die Düse bei jedem Applikationsvorgang abgenommen werden, um aseptische oder sterile Bedingungen einzuhalten.

Der Nachteil dieses Verfahrens ist jedoch, daß die in der Düse verbliebene Materialmenge jedesmal mit weggeworfen wird. Insbesondere in der Dental- und Medizintechnik ist dies von großem Nachteil, da die eingesetzten Materialien in der Regel sehr teuer sind und daher die Verlustmenge möglichst gering gehalten werden sollte. Insbesondere beim Ausbringen von sehr kleinen Mengen kann der Anteil des verworfenen Materials die tatsächlich verbrauchte Menge teilweise sogar um ein Vielfaches überschreiten. Auch aus Umweltschutzaspekten ist es nachteilig, mehr als die unbedingt notwendige Menge dieser Materialien zu verbrauchen, indem ein Teil davon weggeworfen wird.

Es wird bereits versucht, dem durch die Benutzung relativ kleiner Auslaßdüsen entgegenzutreten. Dadurch ist jedoch der Ausbringvorgang erschwert, da das Verhältnis der Austragkolbenfläche zur Düsenfläche noch ungünstiger wird, so daß zum Ausbringen der Massen noch mehr Kraft aufgewendet werden muß. Außerdem ist durch die Verwendung kleiner Düsen die verworfene Materialmenge zwar reduziert, aber insgesamt betrachtet ist der Anteil des Abfalls immer sehr hoch.

Der vorliegenden Erfindung liegt deshalb die Aufgabe zugrunde, einen Applikator zur Verfügung zu stellen, mit dem die in einer Auslaßdüse befindliche Materialmenge annähernd vollständig und ausreichend vermischt ausgebracht werden kann.

Diese Aufgabe wird gelöst durch einen Applikator nach Anspruch 1. Vorteilhafte Ausgestaltungen sind Gegenstand der Unteransprüche.

Der erfindungsgemäße Applikator weist eine Auslaßdüse auf, deren darin eingesetzter Statikmischer am Ende der Applikation in Axialrichtung zusammendrückbar ist, um die Masse weitgehend aus der Auslaßdüse herauszudrücken. Ein bevorzugtes Ausführungsbeispiel der Erfindung sieht vor, daß der Statikmischer mittels eines Ausdrückkolbens zusammendrückbar ist. Bei der Anwendung des erfindungsgemäßen Applikators wird somit gegenüber dem Stand der Technik mit starren, häufig aus Stahl bestehenden Statikmischer, dieser nunmehr in Axialrichtung zusammendrückbar ausgebildett, wobei auch die in der Düse befindliche Materialmenge herausgedrückt wird. Somit kann gegenüber den herkömmlichen Applikatoren auch die in der Düse befindliche Restmenge ausgedrückt werden, wodurch sich eine erhebliche Materialeinsparung ergibt. Gleichzeitig bleibt jedoch der Mischvorgang gewahrt, da auch bei axial zusammengedrückter Wendel des Statikmischers, die gegenläufigen Schneiden und Wendeln bzw. Mischgänge zumindest teilweise erhalten bleiben.

Mittels des beschriebenen Applikators und der erfindungsgemäßen Auslaßdüse mit Statikmischer wird der zu verwerfende Anteil der zu applizierenden, häufig sehr teuren Masse stark reduziert. Da annähernd die gesamte, in der Auslaßdüse enthaltene Menge an Material ausgebracht werden kann, wird lediglich die leere Düse weggeworfen. Dies ist für alle Anwendungsbereiche des erfindungsgemäßen Applikators vorteilhaft, besonders vorteilhaft ist dies jedoch in der Medizin- und Dentaltechnik, da die dort verwendeten Massen wie z.B. Knochenzement und Abformmaterial sehr teuer sind. Durch den erfindungsgemäßen Applikator entfällt auch der Nachteil, daß beim Verbrauch kleiner Mengen der verworfene Anteil gleich hoch oder sogar höher ist als der tatsächlich verwendete. Vielmehr braucht nun lediglich die entleerte Auslaßdüse weggeworfen werden. Diese entleerte Auslaßdüse kann ebenso, wie bei bekannten Applikatoren, als Verschluß für die Kartusche verwendet werden und erst unmittelbar vor der nächsten Verwendung abgezogen werden.

Nachfolgend werden mehrere Ausführungsbeispiele der Erfindung anhand der Zeichungen näher erläutert und beschrieben. Es zeigen:
- Fig. 1: ein Ausführungsbeispiel des Applikators in perspektivischer Gesamtansicht;
- Fig. 2: das Ausführungsbeispiel von Fig. 1 um ca. 60° um die Hauptachse gedreht (im wesentlichen in Draufsicht);
- Fig. 3: einen vergrößerten Querschnitt durch den Applikator (entlang der Linie A-A in Fig. 2); und
- Fig. 4: einen Statikmischer im Ausgangszustand (A) und im teilweise zusammengedrückten Zustand (B).

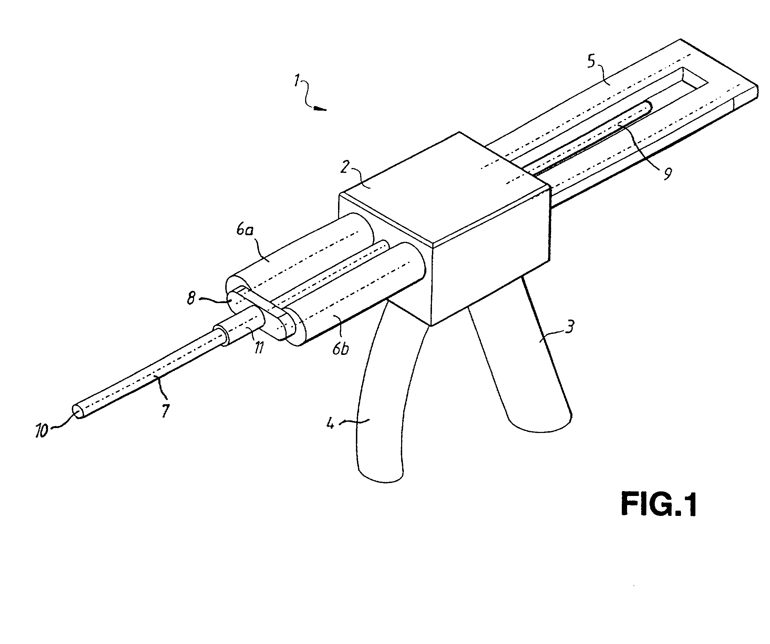

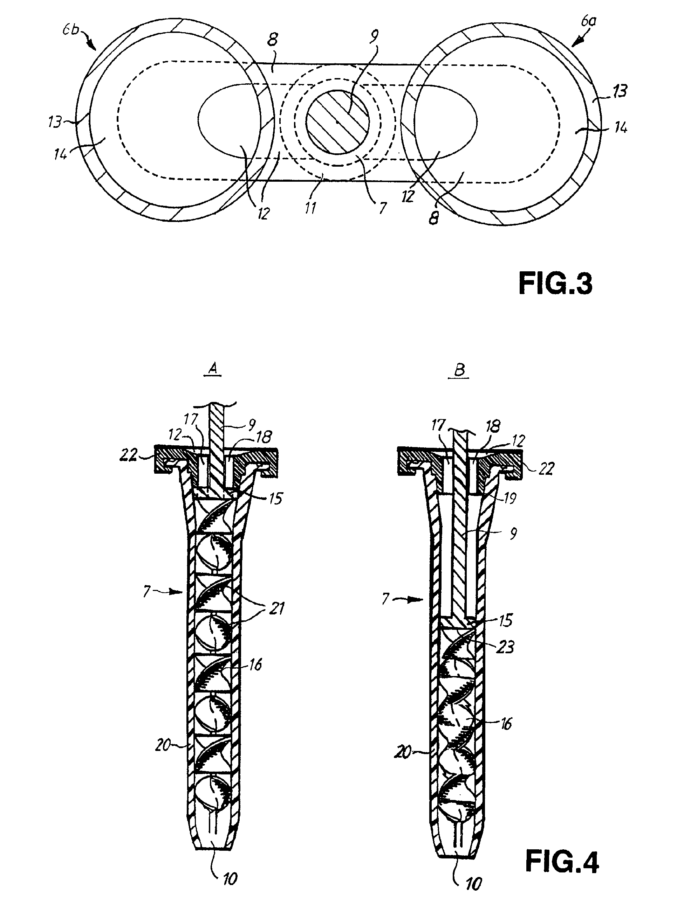

Fig. 1 zeigt ein bevorzugtes Ausführungsbeispiel der Erfindung in perspektivischer Ansicht. Wie aus der Zeichnung ersichtlich, besteht ein erfindungsgemäßer Applikator 1 aus einem Gehäuse 2, das der Führung und dem Antrieb eines gegabelten Austragkolbens 5 dient. Der Vorschub des Doppel-Austragkolbens 5 wird erreicht durch die Betätigung eines Abzugshebels 4 an einem Handgriff 3. Eine Mehrkammerkartusche 6, im dargestellten Ausführungsbeispiel ist dies eine Doppelkartusche, ist mit dem Gehäuse 2 auswechselbar verbunden. Die beiden Kammern 6a und 6b münden über ein Verbindungsteil 8 gemeinsam in eine Auslaßdüse 7. In der Auslaßdüse 7 ist ein wendelförmiger Statikmischer 16 eingesetzt (vgl. Fig. 4). Durch Betätigung des Abzugshebels 3 wird der Austragkolben 5 in Richtung der Auslaßdüse 7 bewegt und so die in der Kartusche 6 befindliche Masse über das Verbindungsteil 8 in die Auslaßdüse 7 hineingedrückt, somit entlang des Statikmischers 16 unter Vermischung hindurchgedrückt und aus der Öffnung 10 der Auslaßdüse 7 herausgedrückt. Aus der Auslaßdüse 7 tritt dann die vermischte Masse aus, bestehend aus den in den Kammern 6a und 6b befindlichen Komponenten.

Der in der Auslaßdüse 7 enthaltene Statikmischer 16 ist neuerungsgemäß in Axialrichtung zusammendrückbar. Dies wird dadurch erreicht, daß der Statikmischer 16 verformbar bzw. elastisch gestaltet ist, indem ein elastisches Material zur Herstellung des wendelförmigen Statikmischers 16 verwendet wird, insbesondere ein elastisches Kunststoffmaterial. Die Elastizität darf jedoch nicht soweit gehen, daß die Mischerwendel bereits durch das Hindurchdrücken der hochviskosen Komponenten deformiert wird, sondern erst dann, wenn dies der Anwender wünscht, nämlich zum Ende der Applikation hin zum Ausdrücken der in der Auslaßdüse 7 noch befindlichen Materialmenge.

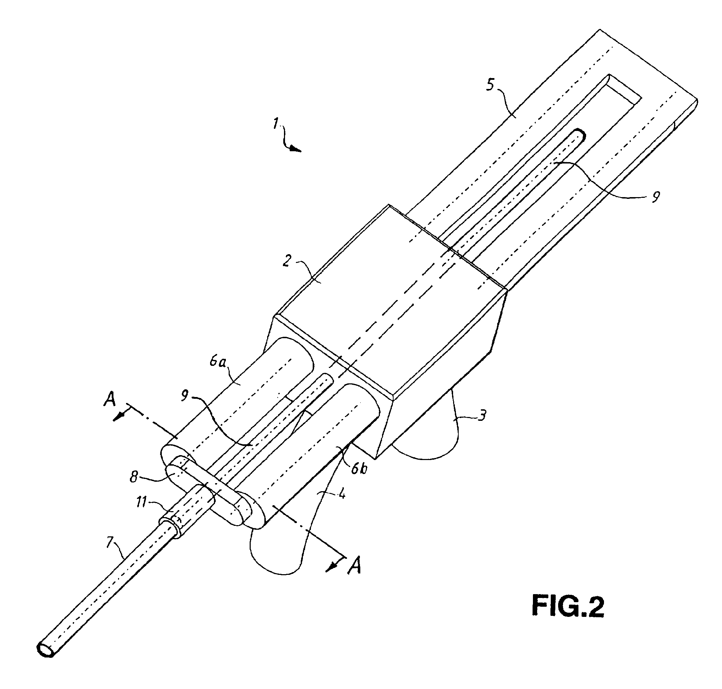

Das Zusammendrücken des Statikmischers 16 kann auf verschiedene Art und Weise geschehen, bevorzugt ist jedoch, daß der Statikmischer 16 mittels eines Ausdrückkolbens in Axialrichtung zusammendrückbar ist. Ein solcher Ausdrückkolben 9 ist vorzugsweise in den Applikator 1 integriert, wie in den Fig. 1 und 2 als zentrales Bauteil dargestellt. Dabei ist bevorzugt, daß der Ausdrückkolben 9 am Gehäuse 2 verschiebbar angebracht ist und durch das Gehäuse 2, wie die Austragkolben 5, eine Führung erhält. Durch Betätigung des Abzugshebels 4 (nach Umschaltung vom Antrieb des Austragkolbens 5, beispielsweise durch eine nicht dargestellte Schaltklinke) wird der Ausdrückkolben 9 in Richtung der Auslaßdüse 7 bewegt und drückt den in der Auslaßdüse 7 befindlichen Statikmischer 16 zusammen. Dadurch wird die in der Auslaßdüse 7 befindliche Rest-Masse aus deren Spitze 10 austreten.

Aus der Draufsicht in Fig. 2 geht besonders deutlich der Verlauf des Ausdrückkolbens 9 hervor, nämlich zwischen dem gegabelten Austragkolben 5 und durch das Gehäuse 2 hindurch, sowie mittig zu den beiden Kartuschen-Kammern 6a und 6b. Aus Fig. 2 wird ebenfalls deutlich, daß der Ausdrückkolben 9 weiter durch das Verbindungselement 8 hindurchgeführt wird, nämlich bis in die Auslaßdüse 7 hinein. Zur Stabilisierung des Übergangsbereichs zwischen Auslaßdüse 7 und Verbindungselement 8 kann dabei eine Hülse 11 vorgesehen sein.

Fig. 3 zeigt einen Querschnitt entlang der Linie A-A in Fig. 2. Dargestellt sind die Wandungen 13 und Lumen 14 der beiden Kammern 6a und 6b der Mehrkammerkartusche 6. Weiterhin ist das Verbindungsteil 8 erkennbar, das die beiden Kammern 6a und 6b mit der Auslaßdüse 7 verbindet. Zwischen den Kammern 6a, 6b und im Zentrum der Auslaßdüse 7 verläuft der Ausdrückkolben 9. Dargestellt ist ferner die Hülse 11, die der Verstärkung dient. Weiterhin ist ein Kanal 12 erkennbar, über den die in den Kammern 6a und 6b befindlichen Komponenten zur Vermischung in die Auslaßdüse 7 mit dem Statikmischer 16 geleitet werden.

In Fig. 4 ist die Auslaßdüse 7 detailliert dargestellt. Innerhalb deren Wandung 20 befindet sich der wendelförmige Statikmischer 16. Dieser besteht bevorzugt aus wechselseitig angeordnet verlaufenden, schraubenförmigen Schneiden 21. Die Auslaßdüse 7 ist über den Abschnitt 22 mit der Mehrkammerkartusche 6 verbindbar. Die in dem Lumen 14 der Kartusche 6 befindliche Masse wird über den Kanal 12 in die Auslaßdüse 7 gedrückt. Es wird dabei jede Komponente der Mehrkammerkartusche 6 einzeln über die Kanäle 17 bzw. 18 dem Statikmischer 16 zugeführt.

Zum Entleeren der Auslaßdüse 7 wird der Statikmischer 16 mit Hilfe des Ausdrückkolbens 9 über die Kolbenfläche 15 zusammengedrückt, die eine Art Rückschlagventil aufweist, nämlich in der Stellung A den Durchtritt der Masse erlaubt (strichlierte Öffnungen in Verlängerung der Kanäle 17, 18), in der Stellung B jedoch sperrt. In Fig. 4A ist der Ausgangszustand des Statikmischers 16 dargestellt, während Fig. 4B den Statikmischer 16 der Fig. 4A in teilweise zusammengedrücktem Zustand zeigt. Durch das Zusammendrücken des Statikmischers 16 mittels des Ausdrückkolbens 9 ist die in der Auslaßdüse 7 befindliche Masse bis zur Unterkante 23 der Kolbenfläche 15 aus der Öffnung 10 herausgedrückt. Durch weiteres Zusammendrücken des Statikmischers 16 mit Hilfe des Ausdrückkolbens 9 in Richtung der Öffnung 10 wird ein annähernd vollständiges Entleeren des Inhalts der Auslaßdüse 7 erreicht. In Fig. 4B ist noch eine Sollbruchstelle 19 angedeutet, die bevorzugt dazu vorgesehen ist, damit der Statikmischer 16 an einer definierten Stelle an der Wandung 20 abreißen kann, wenn durch Drücken des Ausdrückkolbens 9 genügend Druck aufgebracht wird. Zugleich kann dabei das oben erwähnte Rückschlagventil an der Kolbenfläche 15 gesperrt werden.

Ein weiteres Ausführungsbeispiel der Erfindung sieht vor, daß der Ausdrückkolben 9 nicht in das Gehäuse 2 integriert ist, sondern separat in den Applikator 1 einsetzbar ist, z.B. daß dieser von der Rückseite her eingesteckt werden kann. Weiterhin ist vorgesehen, daß der Ausdrückkolben 9 insbesondere an der Außenseite des Gehäuses 2 klappbar angebracht ist und zum Ende des Applikationsvorgang in die Düse 7 eingeklappt werden kann.

Bei der Anwendung des erfindungsgemäßen Applikators 1 wird so vorgegangen, daß durch Betätigung des Abzughebels 4 der Austragkolben 5 im Gehäuse 2 vorgeschoben wird und so die in den Kammern 6a und 6b der Kartusche 6 befindliche Masse in jeweils gewünschter Menge über das Verbindungsteil 8 in die Auslaßdüse 7 hineingedrückt wird. Weiterhin wird die Masse durch den in der Auslaßdüse 7 befindlichen Statikmischer 16 hindurchgedrückt und verläßt innig vermischt die Öffnung 10 der Auslaßdüse 7. Um die Auslaßdüse 7 möglichst vollständig zu entleeren, wird dann durch Umschaltung und Betätigung des Abzugshebels 4 der Ausdrückkolben 9 aktiviert und in Richtung der Auslaßdüsenöffnung 10 bewegt, wodurch der in Axialrichtung verformbare bzw. begrenzt elastische Statikmischer 16 zusammengedrückt wird. Dies erfolgt zum Ende der Applikation hin und insbesondere dadurch, daß durch die Vorwärtsbewegung des Ausdrückkolbens 9 der Statikmischer 16 an der Sollbruchstelle 19 abbricht und zusammengedrückt wird. Durch dieses Zusammendrücken des Statikmischers 16 wird die noch in der Auslaßdüse 7 befindliche, verwendbare Masse durch den zusammengedrückten Statikmischer 16 hindurchgedrückt und aus der Auslaßdüse 10 vermischt herausgedrückt.

Ein weiteres Ausführungsbeispiel sieht vor, daß der Ausdrückkolben 9 ebenfalls kurz vor dem absehbaren Ende der Applikation manuell eingebracht wird, insbesondere gesteckt oder geklappt wird.

Es ist ferner vorgesehen, daß der Applikator 1 so gestaltet ist, daß die für einen üblichen Arbeitsgang, z.B. für eine dentaltechnische Abformung eines Zahnes benötigte Materialmenge mit dem Austragkolben 5 in die Auslaßdüse 7 hineingedrückt wird und dann dieser umgeschaltet wird und mit Hilfe des Ausdrückkolbens 9 diese vorportionierte Menge innerhalb der Auslaßdüse 7 ausgebracht wird. Auf diese Art und Weise kann besonders materialsparend vorgegangen werden, da lediglich die vorportionierte Menge gebraucht wird und so kein Abfall anfällt. Diese Vorportionierung kann z.B. dadurch vorgenommen werden, daß entweder durch die Größe der Auslaßdüse 7 eine bestimmte Menge vorgegeben ist, oder daß beispielsweise über einen Klinken- bzw. Zahnradvorschub innerhalb des Gehäusees 2 eine bestimmte Anzahl an Betätigungen des Abzugshebels 4 einer bestimmten Materialmenge entspricht. Am Gehäuse 2 können hierzu auch Einstellmöglichkeiten zu dieser Vorportionierung vorgesehen sein, beispielsweise Dosierknöpfe.

## Patentansprüche

1. Applikator zum Anmischen und Ausbringen einer Mehrkomponentenmasse aus einer Mehrkammerkartusche, die mit einer Auslaßdüse lösbar verbunden ist, in der ein Statikmischer zum Anmischen der Masse eingesetzt ist, **dadurch gekennzeichnet, daß**
der Statikmischer (16) in Axialrichtung zusammendrückbar ausgebildet ist.

2. Applikator nach Anspruch 1, **dadurch gekennzeichnet, daß** der Statikmischer (16) verformbar, insbesondere elastisch ausgebildet ist.

3. Applikator nach Anspruch 2, **dadurch gekennzeichnet, daß** der Statikmischer (16) aus einem elastischen Kunststoff gefertigt ist.

4. Applikator nach einem der Ansprüche 1 bis 3, **dadurch gekennzeichnet, daß**
der Statikmischer (16) mittels eines Ausdrückkolbens (9) zusammendrückbar ist.

5. Applikator nach Anspruch 4, **dadurch gekennzeichnet, daß**
der Ausdrückkolben (9) in den Applikator (1) integriert ist, insbesondere daß der Ausdrückkolben (9) in oder an einem Gehäuse (2) verschiebbar angeordnet ist.

6. Applikator nach Anspruch 5, **dadurch gekennzeichnet, daß**
der Ausdrückkolben (9) mittels eines umschaltbaren Abzugshebels (4) betätigbar ist.

7. Applikator nach Anspruch 4, **dadurch gekennzeichnet, daß**
der Ausdrückkolben (9) manuell, insbesondere steckbar, in die Auslaßdüse (7) einsetzbar ist.

8. Applikator nach Anspruch 7, **dadurch gekennzeichnet, daß**
der Ausdrückkolben (9) seitlich einklappbar an der Auslaßdüse (7) angebracht ist.

9. Applikator nach einem der vorangegangenen Ansprüche, **dadurch gekennzeichnet, daß**
der Statikmischer (16) eine Sollbruchstelle (19) an einer Wandung (20) der Auslaßdüse (7) aufweist.
